# EUROPEAN PATENT APPLICATION

(11) **EP 4 443 018 A1**
(43) Date of publication of application: **09.10.2024**
(21) Application number: 24167039.7
(22) Date of filing: 27.03.2024
(51) Int. Cl.: F16H 3/00, B64C 13/34, F16H 25/20

(54) **VARIABLE GEAR RATIO TRANSFER GEAR SET FOR ACTUATION SYSTEM**

(30) Priority: 27.03.2023 IN 202311021804
(71) Applicant: Hamilton Sundstrand Corporation, Charlotte, NC 28217-4578 (US)
(72) Inventor: NAVADKAR, Amol Raghunath, Sangli (IN)
(74) Representative: Dehns

(57) **Abstract**

A variable gear ratio gear set system includes a planetary gear set (24) including a sun gear (28) locate at a central axis of rotation, a plurality of planet gears (32) meshed with the sun gear and retained at a carrier (34), and a ring gear (38) surrounding the plurality of planet gears and meshed therewith. An input shaft (22) inputs rotational energy to the planetary gear set at a first rotational speed, and an output shaft (26) outputs rotational energy from the planetary gear set at a second rotational speed. A plurality of one-way clutches (40a, 40b, 40c, 40d) are positioned in the gear set and are engageable such that the system has a first gear ratio when the input shaft is rotated in a first direction, and a second gear ratio when the input shaft is rotated in a second direction.

## Description

### CROSS-REFERENCE TO RELATED APPLICATIONS

This application claims the benefit of Indian Application No. 202311021804 filed March 27, 2023.

### BACKGROUND

Exemplary embodiments pertain to the art of actuator systems, and in particular to torque transfer gear sets for actuation systems.

In some actuation systems, for example, screw-nut driven compressive loaded actuators, the actuator has different torque and stroke time requirements for an extension stroke and for a retraction stroke. This difference is torque and stroke time requirements for the opposing strokes leads to the actuator and the gear set being sized for the maximum torque and stroke time requirements, and thus oversizing of the system to handle those requirements.

### BRIEF DESCRIPTION

In one aspect, a variable gear ratio gear set system includes a planetary gear set including a sun gear locate at a central axis of rotation, a plurality of planet gears meshed with the sun gear and retained at a carrier, and a ring gear surrounding the plurality of planet gears and meshed therewith. An input shaft inputs rotational energy to the planetary gear set at a first rotational speed, and an output shaft outputs rotational energy from the planetary gear set at a second rotational speed. A plurality of one-way clutches are positioned in the gear set and are engageable such that the system has a first gear ratio when the input shaft is rotated in a first direction, and a second gear ratio when the input shaft is rotated in a second direction.

In embodiments, a first one-way clutch of the plurality of one-way clutches is operably coupled to the ring gear and the output shaft.

In embodiments, a second one-way clutch of the plurality of one-way clutches is operably coupled to the carrier and the output shaft.

In embodiments, a third one-way clutch of the plurality of one-way clutches is operably coupled to the ring gear and a ground.

In embodiments, a fourth one-way clutch of the plurality of one-way clutches is operably coupled to the carrier and a ground.

In embodiments, each of the one-way clutches of the plurality of one-way clutches includes a ramp located at a first component, a ring located at a second component, and a roller located between the ramp and the ring, such that during rotation of the first component in a first rotation direction urges the roller up the ramp to jam between the ramp and the ring preventing rotation of the first component relative to the second component, and rotation of the first component in a second rotation direction there is free rotation of the first component relative to the second component.

In embodiments, when the input shaft is rotated in the first direction, a torque transmission path is through the sun gear, through the carrier and through the output shaft.

In embodiments, the ring gear is rotationally fixed.

In embodiments, when the input shaft is rotated in the second direction, a torque transmission path is through the sun gear, through the plurality of planet gears, through the ring gear and through the output shaft.

In embodiments, the carrier is rotationally fixed.

In another aspect, an actuation system includes an actuator configured to drive movement of a component coupled to the actuator, a power source operably coupled to the actuator to drive operation of the actuator, and a variable gear ratio gear set system. The variable gear ratio gear set system includes a planetary gear set including a sun gear located at a central axis of rotation, a plurality of planet gears meshed with the sun gear and retained at a carrier, and a ring gear surrounding the plurality of planet gears and meshed therewith. An input shaft is operably connected to the power source to input rotational energy to the planetary gear set at a first rotational speed, and an output shaft outputs rotational energy from the planetary gear set to the actuator at a second rotational speed. A plurality of one-way clutches are positioned in the gear set and are engageable such that the system has a first gear ratio when the input shaft is rotated in a first direction, and a second gear ratio when the input shaft is rotated in a second direction.

In embodiments, a first one-way clutch of the plurality of one-way clutches is operably coupled to the ring gear and the output shaft.

In embodiments, a second one-way clutch of the plurality of one-way clutches is operably coupled to the carrier and the output shaft.

In embodiments, a third one-way clutch of the plurality of one-way clutches is operably coupled to the ring gear and a ground.

In embodiments, a fourth one-way clutch of the plurality of one-way clutches is operably coupled to the carrier and a ground.

In embodiments, each of the one-way clutches of the plurality of one-way clutches includes a ramp located at a first component, a ring located at a second component, and a roller located between the ramp and the ring, such that during rotation of the first component in a first rotation direction urges the roller up the ramp to jam between the ramp and the ring preventing rotation of the first component relative to the second component, and rotation of the first component in a second rotation direction there is free rotation of the first component relative to the second component.

In embodiments, when the input shaft is rotated in the first direction, a torque transmission path is through the sun gear, through the carrier and through the output shaft.

In embodiments, the ring gear is fixed.

In embodiments, when the input shaft is rotated in the second direction, a torque transmission path is through the sun gear, through the plurality of planet gears, through the ring gear and through the output shaft.

In embodiments, the actuator is a screw nut driven actuator.

### BRIEF DESCRIPTION OF THE DRAWINGS

The following descriptions should not be considered limiting in any way. With reference to the accompanying drawings, like elements are numbered alike:
FIG. 1 is a schematic illustration of an embodiment of an actuation system;
FIG. 2 is a schematic illustration of an embodiment of a transfer gear set of an actuation system;
FIG. 3 is a schematic illustration of an embodiment of a one-way clutch of a transfer gear set;
FIG. 4 is another schematic illustration of an embodiment of a one-way clutch of a transfer gear set; and
FIG. 5 is another schematic illustration of an embodiment of a transfer gear set of an actuation system.

### DETAILED DESCRIPTION

A detailed description of one or more embodiments of the disclosed apparatus and method are presented herein by way of exemplification and not limitation with reference to the Figures.

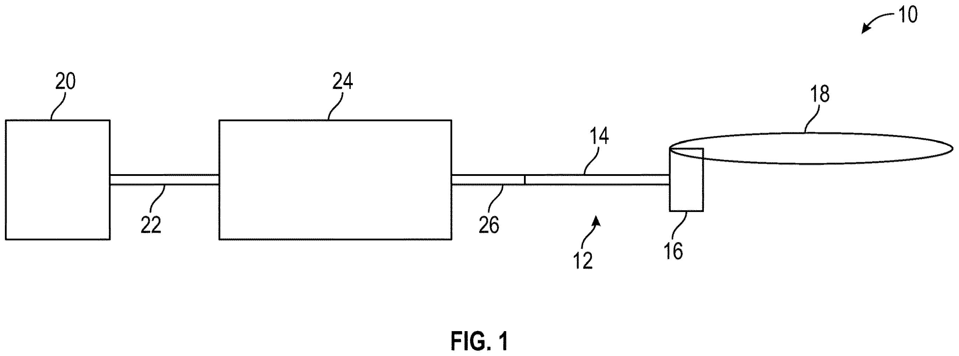

Referring to FIG. 1, illustrated is a schematic illustration of an actuation system 10. The actuation system 10 includes an actuator 12, in one embodiment a screw-nut driven actuator 12. The actuator 12 includes a screw 14 that inputs torque into the actuator 12 and a nut 16 that reacts the torque to effect movement of a driven component, such as a control surface 18 or the like. The actuator 12 is driven by a power source 20, such as a motor or the like. The power source 20 drives rotation of an input shaft 22 at a first speed, which is connected to a transfer gear set 24. The transfer gear set 24 modifies a rotational speed of the energy from the input shaft 22 and outputs the rotational energy at a second speed along an output shaft 26. The output shaft 26 is operably connected to the screw 14 to drove the actuator 12.

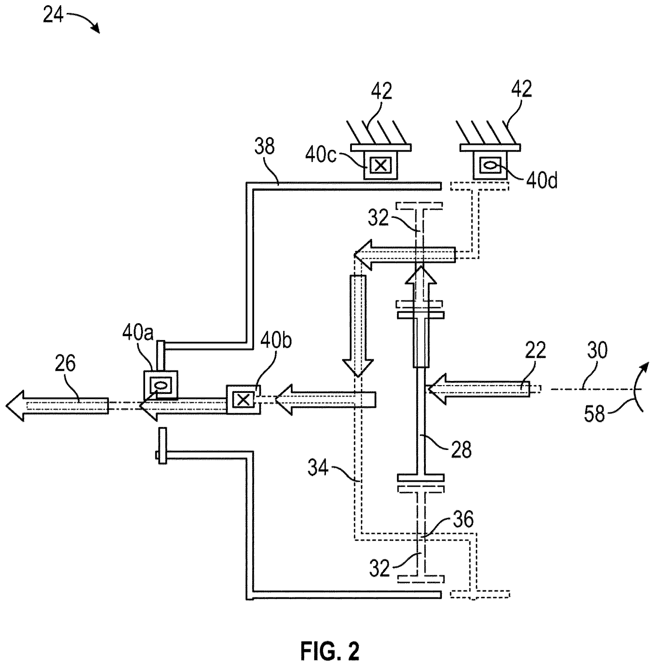

Referring now to FIG. 2, shown is a schematic illustration of an embodiment of a transfer gear set 24. The transfer gear set 24 is a planetary gear set. The transfer gear set 24 includes a sun gear 28 operably connected to the input shaft 22, and in some embodiments shares a common axis of rotation 30 with the input shaft 22. A plurality of planet gears 32 are supported by a carrier 34 and are meshed with the sun gear 28 such that rotation of the sun gear 28 about its axis of rotation 30 urges rotation of each of the planet gears 32 about their respective planet axes of rotation 36. A ring gear 38 surrounds the plurality of planet gears 32 and is meshed with the planet gears 32. The output shaft 26 extends from the transfer gear set 24 and is driven about the axis of rotation 30 by one of the ring gear 38 or the carrier 34, as will be explained further.

The transfer gear set 24 further includes a plurality of one-way clutches. A first one-way clutch 40a is disposed between the ring gear 38 and the output shaft 26, and interconnects the ring gear 38 and the output shaft 26. A second one-way clutch 40b is disposed between the carrier 34 and the output shaft 26, and interconnects the carrier 34 and the output shaft 26. A third one-way clutch 40c is disposed between the ring gear 38 and ground, such as a housing 42 and interconnects the ring gear 38 and the housing 42. A fourth one-way clutch 40d is disposed between the carrier 34 and the housing 42, and interconnects the carrier 34 and the housing 42.

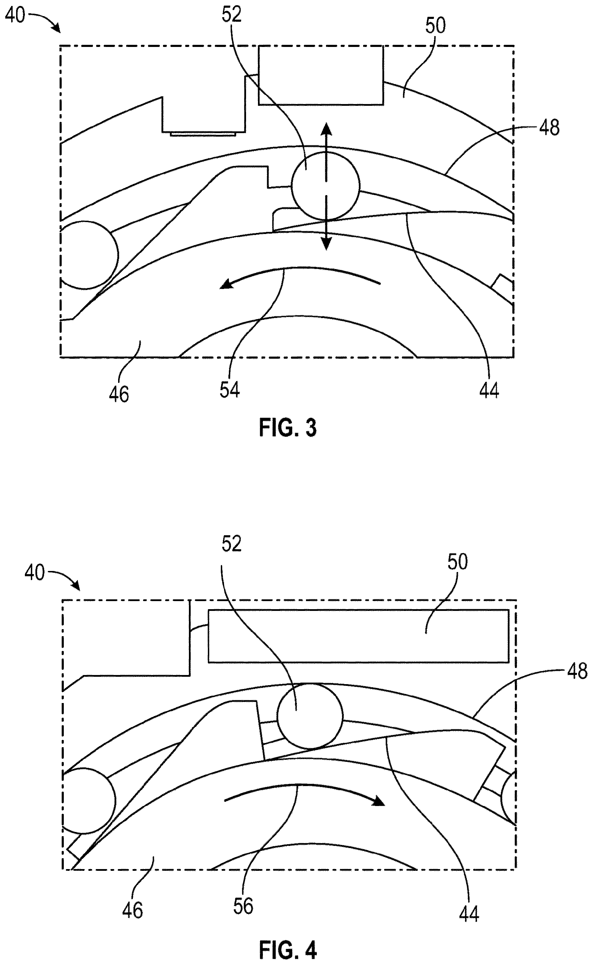

An illustration of an exemplary one-way clutch 40 is shown in FIG. 3. The clutch 40 includes a ramp 44 disposed at a first component 46, and a ring 48 at a second component 50. A clutch element, such as a roller 52, a ball, or a pin is disposed on the ramp 44 between the first component 46 and the second component 50. As illustrated in FIG. 3, when it is attempted to rotate the first component 46 in a first direction 54, the roller 52 travels up the ramp 44 until the roller 52 jams between the ramp 44 and the ring 48 preventing rotation of the first component 46 in the first direction 54. Alternatively, as illustrated in FIG. 4, when the first component 46 is rotated in a second direction 56 opposite the first direction 54, the roller 52 does not jam between the ramp 44 and the ring 48, allowing free rotation of the first component 46 in the second direction 56 relative to the second component 50.

Referring again to FIG. 2, operation of the gear set 24 will be described further. In FIG. 2, the input shaft 22 is driven in a first input direction, for example, a clockwise direction 58 thus driving the sun gear 28 in the clockwise direction 58. When the sun gear 28 is driven in the clockwise direction 58, this results in a free rotation condition at the first one-way clutch 40a, a jam condition at the second one-way clutch 40b and at the third one-way clutch 40c, and a free rotation condition at the fourth one-way clutch 40d. This results in torque transfer from the sun gear 28 through the carrier 34 and then through the output shaft 26. This results in a first gear ratio of 1 + T_{ring}/Tₛᵤₙ, where T_{ring} and Tₛᵤₙ are the number of teeth of the ring gear 38 and the sun gear 28, respectively.

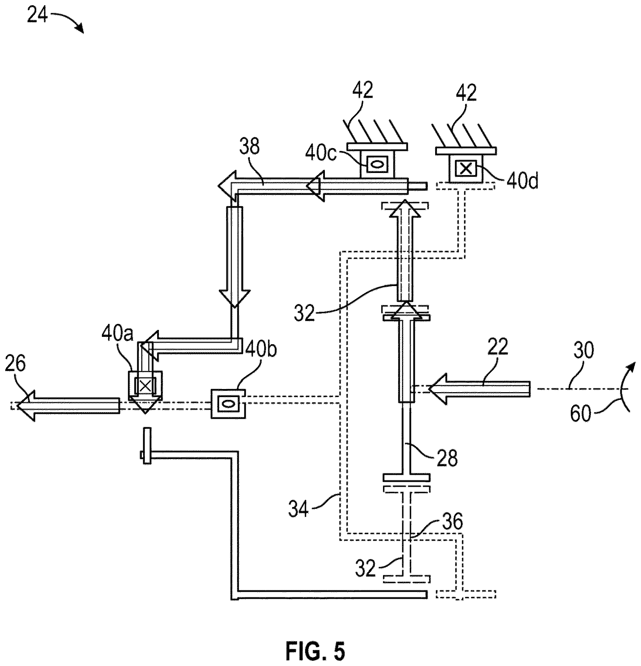

Alternatively, as illustrated in FIG. 5, the sun gear 28 is driven in a second input direction, an anti-clockwise direction 60. This results in a jam condition at the first one-way clutch 40a, a free rotation condition at the second one-way clutch 40b and at the third one-way clutch 40c, and a free-rotation condition at the fourth one-way clutch 40d. In this condition, the torque transfer path is from the sun gear 28, through the plurality of planet gears 32, through the ring gear 38 and through the output shaft 26. This results in a second gear ratio of - T_{ring}/Tₛᵤₙ, where T_{ring} and Tₛᵤₙ are the number of teeth of the ring gear 38 and the sun gear 28, respectively.

Use of the one-way clutches 40 in the way described in the present disclosure, produces different gear ratios from the transfer gear set 24 depending on the direction of rotation of the input shaft 22 Applied to the actuation system 10, when the power source 20 drives the input shaft 22 in a first direction for example, for an extension stroke of the actuator 12, a first gear ratio is utilized. Alternatively, when the power source 20 drives the input shaft 22 in the second direction for example, for a retraction stroke of the actuator 12, the second gear ratio is utilized. This allows for tuning or optimizing of the gear ratios of the transfer gear set 24 such that the gear set 24 may be designed for both the extension and retraction stroke requirements, reducing weight and size of the actuation system 10 compared to typical systems.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A variable gear ratio gear set system, comprising:
a planetary gear set (24) including:
a sun gear (28) disposed at a central axis of rotation;
a plurality of planet gears (32) meshed with the sun gear and retained at a carrier (34); and
a ring gear (38) surrounding the plurality of planet gears and meshed therewith;
an input shaft (22) to input rotational energy to the planetary gear set at a first rotational speed;
an output shaft (26) to output rotational energy from the planetary gear set at a second rotational speed;
a plurality of one-way clutches (40a, 40b, 40c, 40d) disposed in the gear set and engageable such that the system has a first gear ratio when the input shaft is rotated in a first direction, and a second gear ratio when the input shaft is rotated in a second direction.

2. The variable gear ratio gear set system of claim 1, wherein a first one-way clutch (40a) of the plurality of one-way clutches is operably coupled to the ring gear (38) and the output shaft (26).

3. The variable gear ratio gear set system of claim 1 or 2, wherein a second one-way clutch (40b) of the plurality of one-way clutches is operably coupled to the carrier (34) and the output shaft (26).

4. The variable gear ratio gear set system of any preceding claim, wherein a third one-way clutch (40c) of the plurality of one-way clutches is operably coupled to the ring gear(38) and a ground.

5. The variable gear ratio gear set system of any preceding claim, wherein a fourth one-way clutch (40d) of the plurality of one-way clutches is operably coupled to the carrier (34) and a ground.

6. The variable gear ratio gear set system of any preceding claim, wherein each of the one-way clutches of the plurality of one-way clutches includes:
a ramp (44) disposed at a first component (46);
a ring (48) disposed at a second component (50); and
a roller (52) disposed between the ramp and the ring, such that during rotation of the first component in a first rotation direction urges the roller up the ramp to jam between the ramp and the ring preventing rotation of the first component relative to the second component, and rotation of the first component in a second rotation direction there is free rotation of the first component relative to the second component.

7. The variable gear ratio gear set system of any preceding claim, wherein when the input shaft (22) is rotated in the first direction, a torque transmission path is through the sun gear (28), through the carrier (34) and through the output shaft (26).

8. The variable gear ratio gear set system of claim 7, wherein the ring gear (38) is rotationally fixed.

9. The variable gear ratio gear set system of any preceding claim, wherein when the input shaft (22) is rotated in the second direction, a torque transmission path is through the sun gear (28), through the plurality of planet gears (32), through the ring gear (38) and through the output shaft (26).

10. The variable gear ratio gear set system of claim 9, wherein the carrier (34) is rotationally fixed.

11. An actuation system, comprising:
an actuator (12) configured to drive movement of a component coupled to the actuator;
a power source (20) operably coupled to the actuator to drive operation of the actuator; and
a variable gear ratio gear set system as claimed in any preceding claim.

12. The actuation system of claim 11, wherein the actuator (12) is a screw nut driven actuator.
